# EUROPEAN PATENT APPLICATION

(11) **EP 4 276 984 A1**
(43) Date of publication of application: **15.11.2023**
(21) Application number: 23165814.7
(22) Date of filing: 31.03.2023
(51) Int. Cl.: H01M 50/103, H01M 50/105, H01M 50/124

(54) **PACKAGE HOUSING, ELECTROCHEMICAL APPARATUS AND PREPARATION METHOD THEREOF, AND ELECTRONIC APPARATUS**

(30) Priority: 09.05.2022 CN 202210498855
(71) Applicant: Dongguan Amperex Technology Limited, Dongguan City, Guangdong Province 523000 (CN)
(72) Inventor: SHUI, Yanhong, Dongguan City, Guangdong Province, People s Republic of China, 523000 (CN)
(74) Representative: Icosa

(57) **Abstract**

An electrochemical apparatus, including a package housing (001) having a first package body (10) and a second package body (20) being integrally structured to form an accommodating portion (110) and a sealing portion (220). A direction perpendicular to a surface of the sealing portion (220) is a first direction. When viewed from the first direction, the accommodating portion (110) includes a first edge (111) extending a third direction and formed by the integral connection of the first package body (10) and the second package body (20), and a second edge (112) opposite to the first edge (111) in a second direction. The sealing portion (220) includes a third edge (223) connected to the first edge (111). The first direction, the second direction, and the third direction are perpendicular to each other. In a second direction, a distance between the first edge (111) and the second edge (112) is d₁, and a distance between the third edge (223) and the second edge (112) is d₂, wherein d₂≤d₁.

## Description

### TECHNICAL FIELD

This application relates to the field of energy storage technologies, and in particular, to a package housing, an electrochemical apparatus, an electronic apparatus, and a preparation method of electrochemical apparatus.

### BACKGROUND

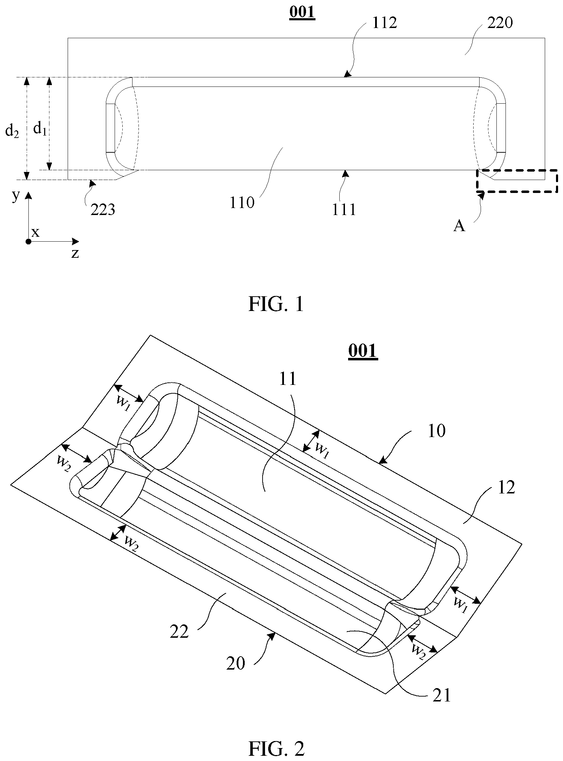

A package housing, as an important part of a secondary battery, significantly affects the size of a secondary battery. Existing cylindrical soft-pack secondary batteries have "redundant parts of packaging" shown in region A of FIG. 1 which protrude from cross sections of secondary battery bodies and result in an increase in the size of secondary batteries. To eliminate the impact of the "redundant parts of packaging" on the size of secondary batteries, it is common to fold the "redundant parts of packaging". Folding, however, is a complicated and costly process that carries a high risk of damaging package housings, and increases the size of secondary batteries, resulting in a loss of energy density of secondary batteries. Therefore, it is urgent for those skilled in the art to seek a new solution to eliminate the "redundant parts of packaging".

### SUMMARY

Some embodiments of this application are intended to provide a package housing, an electrochemical apparatus, an electronic apparatus, and a preparation method of electrochemical apparatus to eliminate "redundant parts of packaging" and improve the energy density and the production processes of electrochemical apparatuses. Specific technical solutions are as follows:

Some embodiments of a first aspect of this application provide a package housing including a first package body and a second package body, the first package body and the second package body being integrally structured, where the first package body and the second package body are joined to form an accommodating portion and a sealing portion connected to the accommodating portion. The first package body includes a first recess and a first sealing edge connected to the first recess, and the second package body includes a second recess and a second sealing edge connected to the second recess, where the first recess and the second recess are joined to form the accommodating portion, and the first sealing edge and the second sealing edge are joined to form the sealing portion. A direction perpendicular to a surface of the sealing portion is a first direction, where observed from the first direction, the accommodating portion includes a first edge formed by the first package body and the second package body being integrally connected and a second edge opposite to the first edge in a second direction, and the sealing portion includes a third edge connected to the first edge, where an extending direction of the first edge is a third direction, and the first direction, the second direction, and the third direction are perpendicular to each other. A distance between the first edge and the second edge is d₁, and a distance between the third edge and the second edge is d₂, where d₂≤d₁.

When a distance di between the first edge and the second edge of the package housing is less than or equal to a distance d₂ between the third edge and the second edge, "redundant parts of packaging" protruding from the accommodating portion as shown in region A in FIG. 1 can be eliminated. In this way, a risk of size increase of a secondary battery resulting from the presence of the "redundant parts of packaging" is decreased, so that the size of the secondary battery is reduced, and a risk of the package housing 001 being damaged because the "redundant parts of packaging" is subjected to external forces is also decreased. In this case, the energy density and the packaging performance of the electrochemical apparatus are improved. In addition, in the prior art, a folding process is typically used to eliminate the "redundant parts of packaging". However, the folding process is complicated and costly, has a risk of damaging the package housing, and possibly increases the size of the secondary battery, causing a loss of the energy density of the secondary battery. In this application, eliminating the "redundant parts of packaging" improves production processes of the package housing, so as to improve production processes of the electrochemical apparatus. Therefore, using the package housing of this application improves the energy density, the packaging performance, and the production processes of the electrochemical apparatus.

In some embodiments of this application, the accommodating portion is cylindrical. In this case, the energy density, the packaging performance, and the production processes of the electrochemical apparatus are improved.

In some embodiments of this application, the first edge includes a first section extending in the third direction and a second section connected to the first section and having an angle of β with the third direction, and the second section is connected to the third edge, where 0°≤β≤180°. As a result, this is more conducive to improving the energy density, the packaging performance, and the production processes of the electrochemical apparatus.

In some embodiments of this application, the second section is arc-shaped. As a result, this is more conducive to improving the energy density, the packaging performance, and the production processes of the electrochemical apparatus.

In some embodiments of this application, the package housing is made of aluminum-plastic film or steel-plastic film. Using the above material, especially the aluminum-plastic film, as the material of the package housing is more conducive to improving the energy density, the packaging performance, and the production processes of the electrochemical apparatus.

In some embodiments of this application, the first sealing edge has a width of wi, and the second sealing edge has a width of w₂, where 1.3 mm≤w₁≤3.5 mm and 1.3 mm≤w₂≤3.5 mm. Controlling the width w₁ of the first sealing edge and the width w₂ of the second sealing edge so that the width w₁ and the width w₂ are in the above range is more conducive to joining the first sealing edge and the second sealing edge, so as to be more conducive to improving the energy density and the packaging performance of the electrochemical apparatus.

Some embodiments of a second aspect of this application provide a package housing including a first package body and a second package body, the first package body and the second package body being integrally structured, where the first package body and the second package body are joined to form an accommodating portion and a sealing portion connected to the accommodating portion. The first package body includes a first recess and a first sealing edge connected to the first recess, and the second package body includes a second recess and a second sealing edge connected to the second recess, where the first recess and the second recess are joined to form the accommodating portion, and the first sealing edge and the second sealing edge are joined to form the sealing portion. The package housing is formed by arranging a plane where the first sealing edge is located and a plane where the second sealing edge is located into a V-shaped structure having an included angle of α and then joining the first sealing edge and the second sealing edge, where 105° ≤ α ≤ 165° . Preferably, 120° ≤ α ≤ 150° . When the first package body and the second package body are joined, the inner perimeter at a joint of the first recess and the second recess is reduced due to a process fillet Ra required by the punching and drawing process, and the included angle α formed between the plane where the first sealing edge is located and the plane where the second sealing edge is located can compensate for the inner perimeter reduced due to the process fillet Ra. In the package housing formed by the foregoing processes, the distance di between the first edge and the second edge of the package housing is less than or equal to the distance d₂ between the third edge and the second edge, so that the "redundant parts of packaging" protruding from the accommodating portion of the package housing as shown in region A in FIG. 1 can be eliminated. In this case, the energy density, the packaging performance, and the production processes of the electrochemical apparatus are improved.

In some embodiments of this application, in the package housing, the plane where the first sealing edge is located and the plane where the second sealing edge is located are arranged into the V-shaped structure having an included angle of α through formation of the first recess and the second recess. In this case, the energy density, the packaging performance, and the production processes of the electrochemical apparatus are improved.

In some embodiments of this application, the accommodating portion is cylindrical. In this case, the energy density, the packaging performance, and the production processes of the electrochemical apparatus are improved.

In some embodiments of this application, the package housing is made of aluminum-plastic film or steel-plastic film. Using the above material, especially the aluminum-plastic film, as the material of the package housing is more conducive to improving the energy density, the packaging performance, and the production processes of the electrochemical apparatus.

In some embodiments of this application, the first sealing edge has a width of wi, and the second sealing edge has a width of w₂, where 1.3 mm≤w₁≤3.5 mm and 1.3 mm≤w₂≤3.5 mm. Controlling the width w₁ of the first sealing edge and the width w₂ of the second sealing edge so that the width w₁ and the width w₂ are in the above range is more conducive to joining the first sealing edge and the second sealing edge, so as to be more conducive to improving the packaging performance of the electrochemical apparatus.

Some embodiments of a third aspect of this application provide an electrochemical apparatus including the package housing according to any one of the embodiments of the first aspect or any one of the embodiments of the second aspect.

Some embodiments of a fourth aspect of this application provide an electronic apparatus including the electrochemical apparatus according to any one of the foregoing embodiments.

Some embodiments of a fifth aspect of this application provide a preparation method of electrochemical apparatus, and the preparation method includes the following steps:
punching material of a package housing to obtain a first package body and a second package body, the first package body and the second package body being integrally structured;
where the first package body includes a first recess and a first sealing edge connected to the first recess, and the second package body includes a second recess and a second sealing edge connected to the second recess, where a plane where the first sealing edge is located and a plane where the second sealing edge is located are arranged into a V-shaped structure having an included angle of α, and 105 ° ≤ α ≤ 165, preferably, 120° ≤ α ≤ 150° ;
placing an electrode assembly into the first recess or the second recess; and
joining the first sealing edge and the second sealing edge so that the first recess and the second recess are joined into an accommodating portion to obtain the electrochemical apparatus.

Certainly, when any one of the products or methods of this application is implemented, all advantages described above are not necessarily achieved simultaneously.

### BRIEF DESCRIPTION OF DRAWINGS

To describe technical solutions in some embodiments of this application or in the prior art more clearly, the following briefly describes the accompanying drawings required for describing some embodiments or the prior art. Apparently, the accompanying drawings in the following descriptions show some embodiments of this application, and persons of ordinary skill in the art may still derive others drawings from these accompanying drawings.
FIG. 1 is a schematic structural diagram of a package housing in the prior art;
FIG. 2 is a schematic structural diagram of a package housing according to some embodiments of this application (before a first package body and a second package body are joined);
FIG. 3 is a schematic structural diagram of a package housing according to some embodiments of this application (after a first package body and a second package body are joined);
FIG. 4 is a schematic structural diagram of a package housing according to another embodiment of this application (after a first package body and a second package body are joined);
FIG. 5 is a schematic structural diagram of a package housing according to some embodiments of this application (before a first package body and a second package body are joined);
FIG. 6 is a schematic structural diagram of dashed-line selected region B in FIG. 3;
FIG. 7 is a schematic structural diagram of a package housing made of aluminum-plastic film according to some embodiments of this application (before punching is performed);
FIG. 8 is a schematic cross-sectional structural diagram of the aluminum-plastic film in FIG. 7 (along direction C-C).

Reference signs in description of specific embodiments are described as follows:
001. package housing;
10. first package body; 11. first recess; 12. first sealing edge;
20. second package body; 21. second recess; 22. second sealing edge;
110. accommodating portion; 111. first edge; 112. second edge; 1111. first section; 1112. second section;
220. sealing portion; 223. third edge;
x. first direction; y. second direction; z. third direction;
003. aluminum-plastic film; 31. heat-sealing layer; 32. intermediate layer; and 33. protection layer.

### DETAILED DESCRIPTION

The following clearly and completely describes technical solutions in some embodiments of this application with reference to the accompanying drawings in some embodiments of this application. Apparently, the described embodiments are only some but not all of the embodiments of this application. Based on some embodiments of this application, all other embodiments obtained by persons of ordinary skill in the art based on this application shall fall within the protection scope of this application.

It should be noted that in specific embodiments of this application, a secondary battery is used as an example of an electrochemical apparatus to explain this application, but the electrochemical apparatus in this application is not limited to the secondary battery.

As shown in FIG. 2 to FIG. 4, some embodiments of a first aspect of this application provide a package housing 001 including a first package body 10 and a second package body 20, the first package body 10 and the second package body 20 being integrally structured, where the first package body 10 and the second package body 20 are joined to form an accommodating portion 110 and a sealing portion 220 connected to the accommodating portion 110. The first package body 10 includes a first recess 11 and a first sealing edge 12 connected to the first recess 11, and the second package body 20 includes a second recess 21 and a second sealing edge 22 connected to the second recess 21, where the first recess 11 and the second recess 21 are joined to form the accommodating portion 110, and the first sealing edge 12 and the second sealing edge 22 are joined to form the sealing portion 220. A direction perpendicular to the surface of the sealing portion 220 is a first direction x, where observed from the first direction x, the accommodating portion 110 includes a first edge 111 formed by the first package body 10 and the second package body 20 being integrally connected and a second edge 112 opposite to the first edge 111 in a second direction y, and the sealing portion 220 includes a third edge 223 connected to the first edge 111, where an extending direction of the first edge 111 is a third direction z, and the first direction x, the second direction y, and the third direction z are perpendicular to each other. It can be understood that as shown in FIG. 2, the third edge 223 is provided at both ends of the first edge 111 in the third direction z. Specifically, observed from the first direction x, the package housing 001 is substantially of a rectangular structure. Therefore, the third direction z may also be understood as a length direction of the rectangular structure, and the second direction y may also be understood as a width direction of the rectangular structure.

A distance between the first edge 111 and the second edge 112 is d₁, and a distance between the third edge 223 and the second edge 112 is d₂, where d₂≤d₁. It should be noted that the above "distance between the first edge 111 and the second edge 112" can be obtained by determining and averaging multiple groups of data. The specific group quantity of the "multiple groups of data" is not particularly limited in this application. Those skilled in the art can select it based on an actual situation, for example, 5 groups to 10 groups.

Those skilled in the art should understand that the "surface" in "the surface of the sealing portion 220" is flat in an ideal case. However, during processes of actual production and application, different factors such as the material of the package housing 001 and the production and processing processes of the package housing 001 may cause the surface of the sealing portion 220 to have defects such as inclination, protrusion, or recess to different extents.

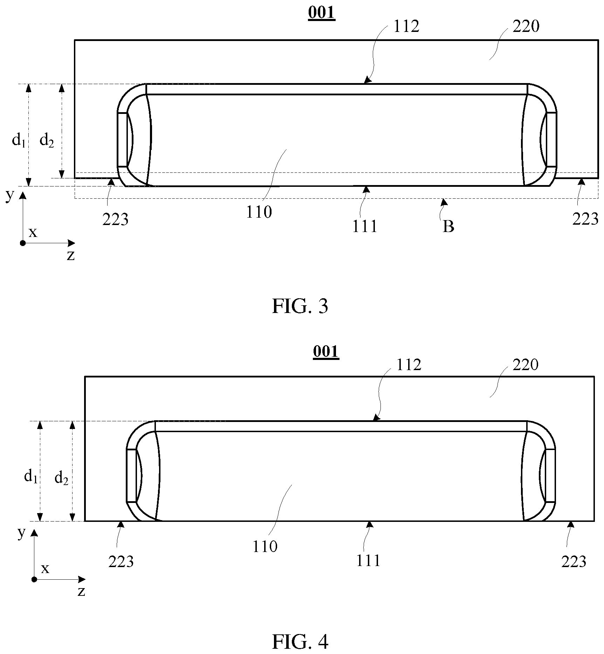

According to the package housing 001 of some embodiments of this application, the first recess 11 and the second recess 21 are joined to form the accommodating portion 110, and the first sealing edge 12 and the second sealing edge 22 are joined to the sealing portion 220, making the first package body 10 and the second package body 20 joined to form the package housing 001. When the distance di between the first edge 111 and the second edge 112 is less than the distance d₂ between the third edge 223 and the second edge 112 as shown in FIG. 3, or the distance di between the first edge 111 and the second edge 112 is equal to the distance d₂ between the third edge 223 and the second edge 112 as shown in FIG. 4, "redundant parts of packaging" protruding from the accommodating portion 110 as shown in region A in FIG. 1 can be eliminated. In this way, a risk of size increase of a secondary battery resulting from the presence of the "redundant parts of packaging" is decreased, so that the size of the secondary battery is reduced, and a risk of the package housing 001 being damaged because the "redundant parts of packaging" is subjected to external forces is also decreased. In this case, the energy density and the packaging performance of the electrochemical apparatus are improved. In addition, in the prior art, a folding process is typically used to eliminate the "redundant parts of packaging". However, the folding process is complicated and costly, has a risk of damaging the package housing 001, and possibly increases the size of the secondary battery, causing a loss of energy density of the secondary battery. In this application, eliminating the "redundant parts of packaging" improves production processes of the package housing 001, so as to improve production processes of the electrochemical apparatus. Therefore, using the package housing 001 of this application improves the energy density, the packaging performance, and the production processes of the electrochemical apparatus.

In this application, as shown in region A of FIG. 1, the "redundant parts of packaging" is a part of the package housing 001 protruding from the first edge 111 in the second direction y.

In some embodiments of this application, the accommodating portion 110 is cylindrical, meaning that the cross sections of the first recess 11 and the second recess 21 are both semi-circular with a same diameter. In this way, when a distance di between the first edge 111 and the second edge 112 of the package housing 001 is less than (as shown in FIG. 3) or equal to (as shown in FIG. 4) the distance d₂ between the third edge 223 and the second edge 112, "redundant parts of packaging" protruding from the accommodating portion 110 of the package housing 001 as shown in region A in FIG. 1 can be eliminated. In this case, the energy density, the packaging performance, and the production processes of the electrochemical apparatus are improved.

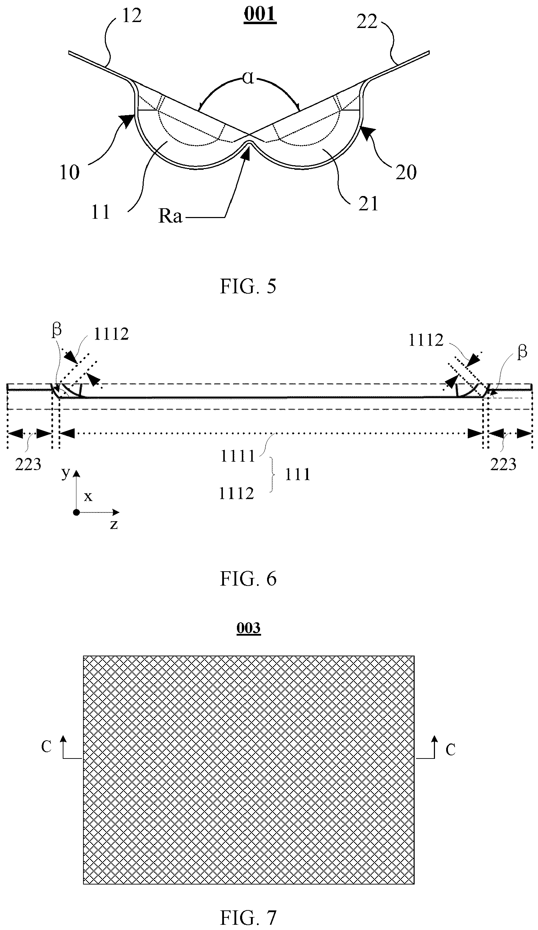

As shown in FIG. 6, in some embodiments of this application, the first edge 111 includes a first section 1111 extending in the third direction z and a second section 1112 connected to the first section 1111 and having an angle of β with the third direction z, and the second section 1112 is connected to the third edge 223, where 0° ≤ β ≤ 180° . In this way, in the second direction y, the third edge 223, relative to the first edge 111, is closer to the second edge 112 or is flush with the first edge 111, decreasing the risk of forming the "redundant parts of packaging" shown in region A of FIG. 1 and formed by the third edge 223 protruding from the accommodating portion 110. As a result, this is more conducive to improving the energy density, the packaging performance, and the production processes of the electrochemical apparatus.

Furthermore, the second section 1112 is arc-shaped. In this case, this is more conducive to connecting the first edge 111 and the third edge 223, so as to be more conducive to eliminating the "redundant parts of packaging" protruding from the accommodating portion 110 of the package housing 001 as shown in region A of FIG. 1. As a result, this is more conducive to improving the energy density, the packaging performance, and the production processes of the electrochemical apparatus.

In some embodiments of this application, the package housing 001 is made of aluminum-plastic film or steel-plastic film, featuring good ductility and facilitating punching to form the package housing 001. Preferably, the package housing 001 is made of aluminum-plastic film. Using the above material, especially the aluminum-plastic film, as the material of the package housing 001 brings better ductility and is more conducive to improving the energy density and the production processes of the electrochemical apparatus.

As shown in FIG. 2, in some embodiments of this application, the first sealing edge 12 has a width of wi, and the second sealing edge 22 has a width of w₂, where 1.3 mm≤w₁≤3.5 mm, and 1.3 mm≤w₂≤3.5 mm. Controlling the width w₁ of the first sealing edge 12 and the width w₂ of the second sealing edge 22 so that the width w₁ and the width w₂ are in the above range is more conducive to joining the first sealing edge 12 and the second sealing edge 22 to form the sealing portion 220 having a proper size, reducing a loss of energy density of the electrochemical apparatus caused by an undesirably large size of the sealing portion 220, and decreasing the risk of cracking of the sealing portion 220 caused by an undesirably small size of the sealing portion 220. As a result, this is more conducive to improving the energy density and the packaging performance of the electrochemical apparatus.

As shown in FIG. 2 to FIG. 5, some embodiments of a second aspect of this application provide a package housing 001 including a first package body 10 and a second package body 20, the first package body 10 and the second package body 20 being integrally structured, where the first package body 10 and the second package body 20 are joined to form an accommodating portion 110 and a sealing portion 220 connected to the accommodating portion 110. The first package body 10 includes a first recess 11 and a first sealing edge 12 connected to the first recess 11, and the second package body 20 includes a second recess 21 and a second sealing edge 22 connected to the second recess 21, where the first recess 11 and the second recess 21 are joined to form the accommodating portion 110, and the first sealing edge 12 and the second sealing edge 22 are joined to form the sealing portion 220. The package housing 001 is formed by arranging a plane where the first sealing edge 12 is located and a plane where the second sealing edge 22 is located into a V-shaped structure having an included angle of α and then joining the first sealing edge 12 and the second sealing edge 22, where 105° ≤ α ≤ 165° . Preferably, 120° ≤ α ≤ 150° .

In this application, the included angle α is typically determined by the following methods: the sealing portion 220 of the package housing 001 shown in FIG. 3 is cut off to preserve only the accommodating portion 110, and then the first recess 11 and the second recess 21 are unfolded normally to determine the included angle α; or a cross-sectional view of plane x and plane y shown in FIG. 5 is obtained, so as to determine the included angle α in the cross sectional view.

According to the package housing 001 of some embodiments of this application, the package housing 001 is formed by arranging a plane where the first sealing edge 12 is located and a plane where the second sealing edge 22 is located into a V-shaped structure having an included angle of α and then joining the first sealing edge 12 and the second sealing edge 22, where 105° ≤ α ≤ 165° . Preferably, 120° ≤ α ≤ 150° . When the first package body 10 and the second package body 20 are joined, the inner perimeter at a joint of the first recess 11 and the second recess 21 is reduced due to a process fillet Ra required by the punching and drawing process, and the included angle α formed between the plane where the first sealing edge 12 is located and the plane where the second sealing edge 22 is located can compensate for the inner perimeter reduced due to the process fillet Ra. In the package housing 001 formed by the foregoing processes, the distance di between the first edge 111 and the second edge 112 of the package housing 001 is less than or equal to the distance d₂ between the third edge 223 and the second edge 112, so that the "redundant parts of packaging" protruding from the accommodating portion 110 of the package housing 001 as shown in region A in FIG. 1 can be eliminated. In this way, a risk of size increase of a secondary battery resulting from the presence of the "redundant parts of packaging" is decreased, so that the size of the secondary battery is reduced, and a risk of the package housing 001 being damaged because the "redundant parts of packaging" is subjected to external forces is also decreased. In this case, the energy density and the packaging performance of the electrochemical apparatus are improved. In addition, in the prior art, a folding process is typically used to eliminate the "redundant parts of packaging". However, the folding process is complicated and costly, has a risk of damaging the package housing, and possibly increases the size of the secondary battery, causing a loss of the energy density of the secondary battery. In this application, eliminating the "redundant parts of packaging" improves production processes of the package housing 001, so as to improve production processes of the electrochemical apparatus. Therefore, using the package housing 001 of this application improves the energy density, the packaging performance, and the production processes of the electrochemical apparatus.

In some embodiments of this application, in the package housing 001, the plane where the first sealing edge 12 is located and the plane where the second sealing edge 22 is located are arranged into the V-shaped structure having an included angle of α through formation of the first recess 11 and the second recess 21. In this way, when the first recess 11 and the second recess 21 are formed, the impact from decrease in the inner perimeter at the joint of the first recess 11 and the second recess 21 caused by the process fillet Ra required by the punching and drawing process can be decreased, and the cross sections of the first recess 11 and the second recess 21 are more apt to be semi-circular with a same radius, so that the accommodating portion 110 formed by joining the first recess 11 and the second recess 21 is cylindrical. In this way, when a distance di between the first edge 111 and the second edge 112 of the package housing 001 is less than or equal to the distance d₂ between the third edge 223 and the second edge 112, "redundant parts of packaging" protruding from the accommodating portion 110 of the package housing 001 as shown in region A in FIG. 1 can be eliminated. In this case, the energy density, the packaging performance, and the production processes of the electrochemical apparatus are improved.

In some embodiments of this application, the accommodating portion 110 is cylindrical. This means that when the first recess 11 and the second recess 21 are formed by punching, the impact of decrease in the inner perimeter at the joint of the first recess 11 and the second recess 21 caused by the process fillet Ra required by the punching and drawing process can be decreased, and the cross sections of the first recess 11 and the second recess 21 are semi-circular with the same diameter. In this way, when a distance di between the first edge 111 and the second edge 112 of the package housing 001 is less than or equal to the distance d₂ between the third edge 223 and the second edge 112, "redundant parts of packaging" protruding from the accommodating portion 110 of the package housing 001 as shown in region A in FIG. 1 can be eliminated. In this case, the energy density, the packaging performance, and the production processes of the electrochemical apparatus are improved.

In this application, the above "cylindrical" should be understood as an approximately cylindrical shape. Those skilled in the art should understand that the accommodating portion 110 is cylindrical in an ideal case, but during actual production and application, different factors, such as the material of the package housing 001, formation of the first recess 11 and the second recess 21, and the joining of the first recess 11 and the second recess 21, may cause the accommodating portion 110 to have defects such as protrusion or recess to different extents.

In some embodiments of this application, a joint of the first package body 10 and the second package body 20 is provided with a transition arc structure. In some other embodiments, a joint of the first recess 11 and the first sealing edge 12 is provided with a transition arc structure, and/or a joint of the second recess 21 and the second sealing edge 22 is provided with a transition arc structure. In still some other embodiments, the first recess 11 includes a first semi-circular surface, a second semi-circular surface, and a first semi-cylindrical surface located between the first semi-circular surface and the second semi-circular surface, and the second recess 21 includes a third semi-circular surface, a fourth semi-circular surface, and a second semi-cylindrical surface located between the third semi-circular surface and the fourth semi-circular surface. Transition arc structures are arranged at a joint of the first semi-cylindrical surface and the first semi-circular surface and a joint of the first semi-cylindrical surface and the second semi-circular surface, and/or transition arc structures are arranged at a joint of the second semi-cylindrical surface and the third semi-circular surface and a joint of the second semi-cylindrical surface and the fourth semi-circular surface. Arranging the transition arc structure in the package housing 001 is more conducive to the packaging performance of the electrochemical apparatus.

In some embodiments of this application, the package housing 001 is made of aluminum-plastic film or steel-plastic film, featuring good ductility and facilitating punching to form the package housing 001. Preferably, the package housing 001 is made of aluminum-plastic film. Using the above material, especially the aluminum-plastic film, as the material of the package housing 001 brings better ductility and is more conducive to improving the energy density and the production processes of the electrochemical apparatus.

The aluminum-plastic film and steel-plastic film in this application are not particularly limited, provided that the objectives of this application can be achieved. For example, the aluminum-plastic film and steel-plastic film each independently include a heat-sealing layer, a protection layer, and an intermediate layer located between the heat-sealing layer and the protection layer. Materials of the heat-sealing layer, the protection layer, and the intermediate layer in this application are not particularly limited, provided that the objectives of this application can be achieved. For example, the material of the heat-sealing layer includes but is not limited to at least one of polyethylene or polypropylene. The material of the protection layer includes but is not limited to at least one of nylon or polyethylene terephthalate. The material of the intermediate layer includes but is not limited to aluminum or steel. Thicknesses of the heat-sealing layer, the protection layer, and the intermediate layer are not particularly limited in this application, provided that the objectives of this application can be achieved.

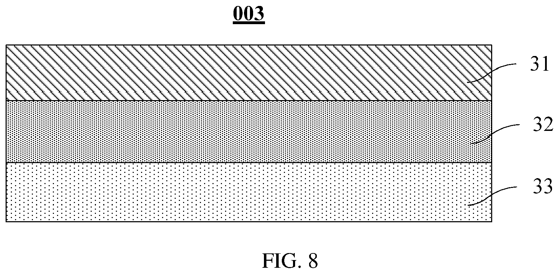

For example, FIG. 7 is a schematic structural diagram of a package housing made of aluminum-plastic film according to some embodiments of this application (before punching is performed), and FIG. 8 is a schematic cross-sectional structural diagram of the aluminum-plastic film in FIG. 7 along direction C-C. As shown in FIG. 7 and FIG. 8, before being punched, the aluminum-plastic film 003 is typically in a plane shape, and the aluminum-plastic film 003 includes a heat-sealing layer 31, an intermediate layer 32, and a protection layer 33, where the intermediate layer 32 is located between the heat-sealing layer 31 and the protection layer 33.

As shown in FIG. 2, in some embodiments of this application, the first sealing edge 12 has a width of wi, and the second sealing edge 22 has a width of w₂, where 1.3 mm≤w₁≤3.5 mm and 1.3 mm≤w₂≤3.5 mm. Controlling the width w₁ of the first sealing edge 12 and the width w₂ of the second sealing edge 22 so that the width w₁ and the width w₂ are in the above range is more conducive to joining the first sealing edge 12 and the second sealing edge 22, so as to be more conducive to improving the packaging performance of the electrochemical apparatus.

Some embodiments of a third aspect of this application provide an electrochemical apparatus including the package housing 001 according to any one of the embodiments of the first aspect or any one of the embodiments of the second aspect. Therefore, all the beneficial effects of the package housing 001 in the embodiments of the first aspect can be obtained, or all the beneficial effects of the package housing 001 in the embodiments of the second aspect can be obtained.

The electrochemical apparatus in this application is not particularly limited, and may include any apparatus in which an electrochemical reaction takes place. In some embodiments, the electrochemical apparatus may include but is not limited to a lithium metal secondary battery, a lithium-ion secondary battery, a sodium-ion secondary battery, a lithium polymer secondary battery, or a lithium-ion polymer secondary battery.

Some embodiments of a fourth aspect of this application provide an electronic apparatus including the electrochemical apparatus according to the third aspect of this application. Therefore, all the beneficial effects of the package housing 001 in the embodiments of the first aspect can be obtained, or all the beneficial effects of the package housing 001 in the embodiments of the second aspect can be obtained.

The electronic apparatus in this application is not particularly limited and may be any known electronic apparatus in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, or a large household battery.

Some embodiments of a fifth aspect of this application provide a preparation method of electrochemical apparatus. As shown in FIG. 2, FIG. 3, FIG. 7, and FIG. 8, the preparation method includes the following steps:

Material of a package housing 001 is punched to obtain a first package body 10 and a second package body 20, the first package body 10 and the second package body 20 being integrally structured; furthermore, the material of the package housing 001 includes aluminum-plastic film 003 or steel-plastic film, preferably, the aluminum-plastic film 003.

The first package body 10 includes a first recess 11 and a first sealing edge 12 connected to the first recess 11, and the second package body 20 includes a second recess 21 and a second sealing edge 22 connected to the second recess 21, where a plane where the first sealing edge 12 is located and a plane where the second sealing edge 22 is located are arranged into a V-shaped structure having an included angle of α, and 105 ° ≤ α ≤ 165, preferably, 120° ≤ α ≤ 150° .

An electrode assembly (not shown in the figure) is placed into the first recess 11 or the second recess 21.

The first sealing edge 12 and the second sealing edge 22 are joined so that the first recess 11 and the second recess 21 are joined into an accommodating portion 110 to obtain the electrochemical apparatus.

For the electrochemical apparatus obtained by using the above preparation method, all the beneficial effects of the package housing 001 in the embodiments of the first aspect can be obtained, or all the beneficial effects of the package housing 001 in the embodiments of the second aspect can be obtained.

It should be noted that relational terms such as "first" and "second" are only used to distinguish one entity or operation from another entity or operation, and do not necessarily require or imply that there is any such actual relationship or order between these entities or operations. Terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device. Under the condition of no more limitations, an element defined by the statement "including one..." does not exclude existence of the same other elements in a process, a method, an article or a device including the element.

The embodiments in this specification are described in a related manner. For a part that is the same or similar between the embodiments, reference may be made between the embodiments. Each embodiment focuses on differences from other embodiments.

The foregoing descriptions are merely preferred examples of this application, and are not intended to limit the protection scope of this application. Any modification, equivalent replacement, improvement, or the like made without departing from the spirit and principle of this application shall fall within the protection scope of this application.

## Claims

1. An electrochemical apparatus, comprising: a package housing (001); **characterized in that**, the package housing (001) comprises a first package body (10) and a second package body (20), the first package body (10) and the second package body (20) being integrally structured; wherein the first package body (10) and the second package body (20) are joined to form an accommodating portion (110) and a sealing portion (220) connected to the accommodating portion (110);
the first package body (10) comprises a first recess (11) and a first sealing edge (12) connected to the first recess (11), and the second package body (20) comprises a second recess (21) and a second sealing edge (22) connected to the second recess (21), wherein the first recess (11) and the second recess (21) are joined to form the accommodating portion (110), and the first sealing edge (12) and the second sealing edge (22) are joined to form the sealing portion (220);
a direction perpendicular to a surface of the sealing portion (220) is a first direction, wherein, when viewed from the first direction, the accommodating portion (110) comprises a first edge (111) formed by the integral connection of the first package body (10) and the second package body (20), and a second edge (112) opposite to the first edge (111) in a second direction; and the sealing portion (220) comprises a third edge (223) connected to the first edge (111), wherein an extending direction of the first edge (111) is a third direction; and the first direction, the second direction, and the third direction are perpendicular to each other; and
in a second direction, a distance between the first edge (111) and the second edge (112) is d₁, and a distance between the third edge (223) and the second edge (112) is d₂, wherein d₂≤d₁.

2. The electrochemical apparatus according to claim 1, **characterized in that**, the first edge (111) comprises a first section (1111) extending in the third direction and a second section (1111) connected to the first section (1111) and having an angle of β with the third direction, and the second section (1112) is connected to the third edge (223), wherein 0° ≤ β ≤ 180° .

3. The electrochemical apparatus according to claim 2, **characterized in that**, the second section (1111) is arc-shaped.

4. The electrochemical apparatus according to claim 1, **characterized in that**, the accommodating portion (110) is cylindrical.

5. The electrochemical apparatus according to claim 1, **characterized in that**, the package housing (001) is made of an aluminum-plastic film or a steel-plastic film.

6. The electrochemical apparatus according to claim 1, **characterized in that**, the first sealing edge (12) has a width of wi, and the second sealing edge (22) has a width of w₂, wherein 1.3 mm≤w₁≤3.5 mm and 1.3 mm≤w₂≤3.5 mm.

7. The electrochemical apparatus according to claim 1, **characterized in that**, the package housing (001) is formed by arranging a plane where the first sealing edge (12) is located and a plane where the second sealing edge (22) is located into a V-shaped structure having an included angle of α and then joining the first sealing edge (12) and the second sealing edge (22), wherein 105° ≤ α ≤ 165° .

8. The electrochemical apparatus according to claim 7, **characterized in that**, 120° ≤ α ≤ 150° .

9. The electrochemical apparatus according to claim 7, **characterized in that**, in the package housing (001), the plane where the first sealing edge (12) is located and the plane where the second sealing edge (22) is located are arranged into the V-shaped structure having an included angle of α through formation of the first recess (11) and the second recess (21).

10. The electrochemical apparatus according to claim 7, **characterized in that**, the accommodating portion (110) is cylindrical.

11. The electrochemical apparatus according to claim 7, **characterized in that**, the package housing (001) is made of an aluminum-plastic film or a steel-plastic film.

12. The electrochemical apparatus according to claim 7, **characterized in that**, the first sealing edge (12) has a width of wi, and the second sealing edge (22) has a width of w₂, wherein 1.3 mm≤w₁≤3.5 mm and 1.3 mm≤w₂≤3.5 mm.

13. An electronic apparatus, **characterized in that**, the electronic apparatus comprises the electrochemical apparatus according to any one of claims 1-12.
